Europäisches Patentamt

European Patent Office

Office européen des brevets

(11) Publication number: **0 408 375 A2**

## EUROPEAN PATENT APPLICATION

(21) Application number: **90307666.9**

(22) Date of filing: **12.07.90**

(51) Int. Cl.⁵: **B01D 35/30**

(30) Priority: **12.07.89 GB 8916058**

(43) Date of publication of application:
**16.01.91 Bulletin 91/03**

(84) Designated Contracting States:
**DE FR IT**

(71) Applicant: **PALL CORPORATION**
**30 Sea Cliff Avenue**
**Glen Cove New York 11542(US)**

(72) Inventor: **Buttery, Roger A.**
**37 Monks Orchard**
**Petersfield Hampshire GU32 2JD(GB)**
Inventor: **Rothwell, Charles N.**
**169 Huddersfield Road**
**Halifax West Yorkshire HX3 0AS(GB)**

(74) Representative: **Knott, Stephen Gilbert et al**
**MATHISEN, MACARA & CO. The Coach**
**House 6-8 Swakeleys Roadoad**
**Ickenham Uxbridge Middlesex UB10 8BZ(GB)**

(54) **Filter assemblies and couplings.**

㉗ A filter assembly includes a tubular end (25) which is a sliding fit in a socket (44) in a coupling (14). Seals (36,39) are provided between the tube (25) and the socket (44) to form a closed chamber (52) which is connected to the tube and to a passage (46) in the coupling extending at right angles to the length of the tube(25). The tube (25) can move relatively to the socket without destroying the seal of the chamber (52) so maintaining a fluid tight passage through the tube (25) and the coupling (14). The filter assembly can be readily demounted from the coupling by removing the end of the tube (25) from the socket (44).

Fig.2.

## FILTER ASSEMBLIES COUPLINGS

The invention relates to filter assemblies and couplings.

In use, a filter assembly may be mounted in apparatus where fluid flows to and from the assembly in directions normal to the length of the assembly. In addition, the assembly may have to be mounted in the apparatus so that it can be removed and replaced by a new assembly when the filter element is not longer usable.

For this purpose, it has been necessary to mount at least one end of the assembly in a coupling from which the assembly is disengageable but which diverts the flow to or from the end of the assembly through 90° or some other required angle. It is, however, also a problem that filter assemblies can, under certain conditions, swell, for example when solvents ace being filtered, and this can lead to the length of the filter changing.

Accordingly, it is a requirement for such a coupling that it must divert the flow through an angle, be fluid tight, accommodate changes of length of the filter assembly and also allow the filter assembly to be demounted.

According to the invention, there is provided a filter assembly and coupling, in which the filter assembly has a tubular housing and, at one end, an inlet/outlet tube having an axis coaxial with or parallel to the axis of the housing, said tube being received in a socket provided in said coupling via an open end of said socket, said tube and said socket being provided with sealing means therebetween to define a closed annular chamber between an exterior surface of the tube and an interior surface of the socket, the tube being formed with a passage connecting with said chamber and the coupling having a passage leading in a direction at an angle to the length of the tube and also connected to said chamber, and the tube being movable relative to the socket while maintaining said chamber closed.

In this way, the tube can slide in the socket, as the filter assembly swells while a continuous path for fluid thorugh the tube and the connector is maintained via the chamber.

The following is a more detailed description of one embodiment of the invention, by way of example, reference being made to the accompanying drawings in which:-

Figure 1 is a side elevation, partly in section, of a apparatus for filtering a solvent and inclding six filter assemblies and associated couplings attached to inlet and outlet manifolds, an outlet to one filter assembly and the associated couplings being shown in section,

Figure 2 is a view of the sectioned part of the apparatus of Figure 1, but to a larger scale than Figure 1 and

Figure 3 is a plan view from above of the apparatus of Figure 1.

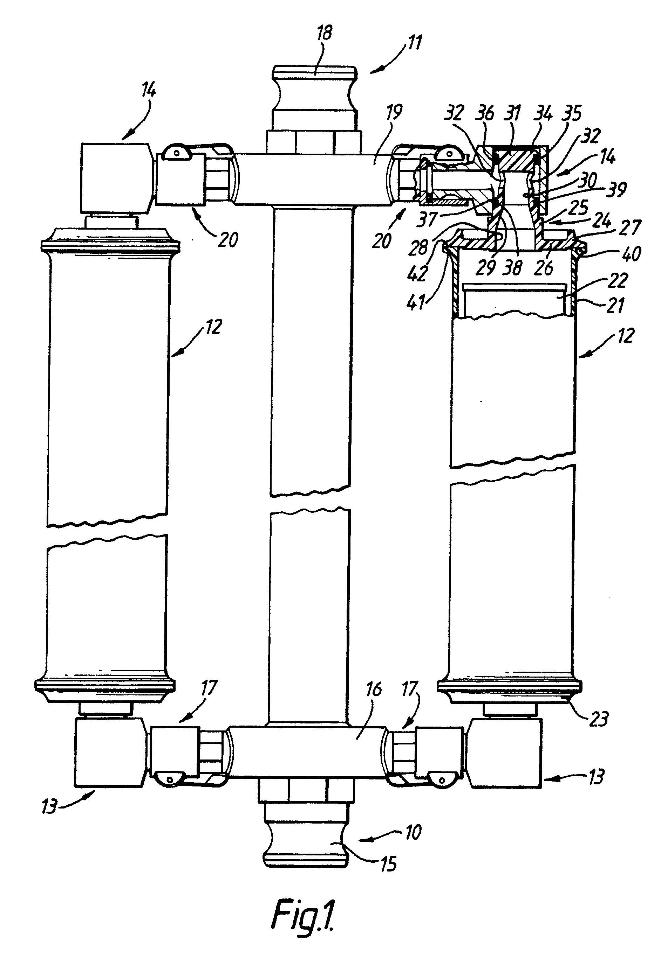

Referring first to Figures 1 and 3, the apparatus comprises an inlet manifold 10, an outlet manifold 11, six filter assemblies indicated generally at 12, six inlet couplings 13 and six outlet couplings 14.

The inlet manifold includes an inlet 15 leading to a cylindrical chamber 16 from which project six equiangularly spaced outlets 17. The outlet manifold 11 is similarly constructed but oppositely arranged, with an outlet 18 leading from a cylindrical chamber 19 from which project six equiangularly spaced inlets 20. Each manifold outlet 17 is connected to an inlet coupling 13 and each manifold inlet 20 is connected to an outlet couplings 14. These couplings will be described in more detail below.

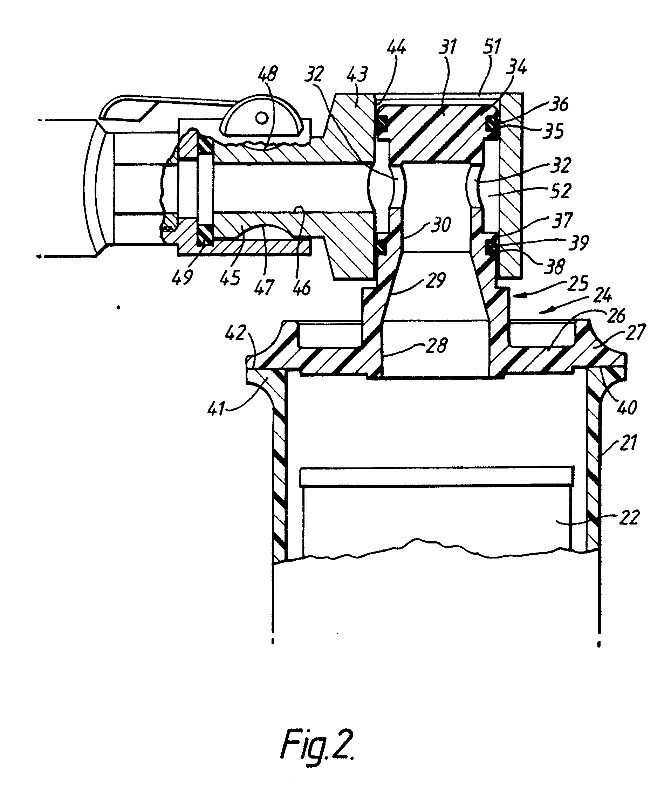

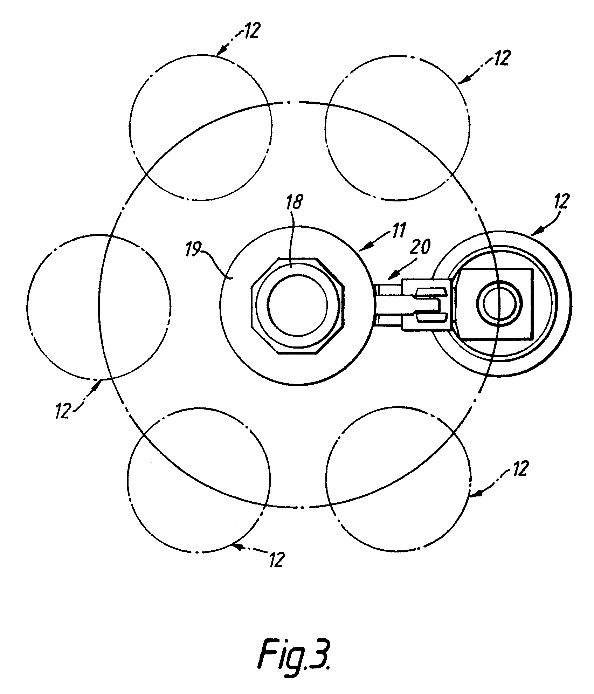

Each filter assembly 12 is constructed and formed as follows, with reference to Figure 2.

The filter assembly comprises a tubular housing 21 of a plastics material containing a filter element 22 of any suitable known kind. Inlet and outlet end caps 23, 24 are provided at the ends of the tubular housing 21. Only the construction of the outlet end cap 24 will be described in detail - but it will be appreciated that the inlet end cap 23 is similarly formed.

The outlet end cap 24 is formed of a plastics material and includes a tube 25 provided at one end with a flange 26. The flange 26 is formed with a thickened stiffening web 27 adjacent to its periphery.

The flange is provided with an annular surface 40 lying in a plane normal to the common axis 33 of the tube at 35 and the housing 21.

The interior of the tube 25 has, extending from the flanged end, a portion 28 of constant diameter succeeded by a frustoconical portion of reducing diameter and terminating in a second constant diameter portion 30. The end of the tube is closed by a head 31. Two diametrically opposed apertures 32 extend through the tube in directions normal to the common axis of the tube 25 and the housing 21.

The exterior of the tube is formed at the head with a constant diameter portion 34 in which is provided a groove 35 receiving an O ring 36. A second constant diameter portion 37 is provided intermediate the head 31 and the flange 26 and is also provided with a groove 38 receiving an O ring 39. The diameter of the two constant diameter portions 34 and 37 is the same.

Between these constant diameter portions 34, 37 the exterior of the tube is of lesser diameter. 1

The function of these portions 34, 37 and the O-rings 36, 39 will be described in more detail.

The connection of the filter assemblies 12 to the couplings 13, 14 will now be described with reference to Figure 2. The details of the tubes 25 on the end caps 23, 24 have already been described above. An outlet coupling 14 will now be described in detail, it being appreciated that the inlet couplings 13 are similarly arranged.

An outlet coupling 14 comprises of body 43 in which is formed a generally cylindrical socket 44. A tube 45 projects from one side of the body 43 and is provided with a passage 46 connecting with, and extending normal to, the socket 44. The exterior of the tube 45 is provided with a curved annular recess 47 which receives a lever operated pivotal cam 48 carried on the associated manifold inlet 20 and acting to connect releasably the coupling 14 to the manifold inlet 20 by forcing the end of the tube 45 against a seal 49 carried at the end of an aperture 50 within which the tube 45 is received.

The socket 44 has an internal diameter which Iis only slightly larger than the external diameter of the constant diameter portions 30, 34 on the tube 25. The length of the socket 44 is greater than the distance between the O-rings 36, 39 and the location of the O-rings 36, 39 is such that they span the end of the passage 46.

Thus, as seen in Figure 1, the end of the tube 25 can be inserted in the socket via its open end until the head 31 is adjacent the end 51 of the socket 44. When so assembled, the O rings 36, 39 engage the interior surface of the socket 45 and so form closed ends of an annular chamber 52 extending around the tube 25 between the O rings 36, 39 and in communication with the apertures 32 and the coupling passage 46. In this way, a fluid path is provided extending through the tube 25, through the apertures 32, through the chamber 52 and through the coupling passage 46. This diverts the fluid flow through a right angle between the tube 25 and the coupling passage 46. Of course, the fluid flow could be diverted through an angle other than 90°.

If the filter assembly 12 swells, which may occur if it is being used for filtering solvents, the length of the filter assembly 12 may increase. This is accommodated by the tube 25 sliding upwardly (shown in Figure 1) relatively to the coupling 14. The distance between the O rings 36, 39 is so much greater than the diameter of the coupling passage 46 that the chamber 52 is kept fluid tight despite such movement since the lower O-ring 39 does not pass the lower edge of the entrance to the coupling passage 46. Of course, the coupling passage may terminate in the socket in an aperture that is not circular, in which case, the distance between the O-rings 36,39 will be sufficiently greater than the dimension of the aperture in a direction parallel to the axis of the socket 45. In addition, there need not be two O-rings 36,39. The upper end of the socket 45 could be closed and only the lower O-ring provided to close the chamber 52.

Of course, were contraction of the filter assembly 12 to be accommodated, in addition to or as an alternative to the accommodation of expansion, it would be necessary to ensure a sufficient spacing between the lower O-ring 39 and the open end of the socket 45. In addition, it would also be necessary, where the opposite end of the socket 45 is open, to provide a sufficient distance between the upper O-ring 36 and the entrance to the coupling passage 46 to accommodate such contraction.

When the filter element 22 is no longer usable, the filter assembly 12 can be readily demounted from the apparatus. This is done by releasing the lever operated cams 48, to allow the filter assembly and the inlet and outlet couplings to be removed from the apparatus. The couplings 13, 14 can then be disengaged from the tubes by sliding the sockets 44 off the tubes 25.

A fresh filter assembly can next be connected to inlet and outlet couplings 13, 14 by pushing tubes 25 into respective sockets 44 in such couplings 13, 14. The couplings 13, 14 can then be connected to the manifold outlet and the manifold inlet respectively by use of the lever operated cams 48.

The manifold inlets and outlets 15, 18 may be provided with valves (not shown) to allow each filter assembly 12 to be isolated. This means that a filter assembly 12 can be replaced without the need for shuting down the apparatus.

It will be appreciated that the sealing means on the tube 25 need not be formed by O rings 36, 39. Any suitable seals could be used.

The tubes 25 of the filter assembly 12 or at least one of each pair of tubes 25, could be provided with a vent which projects through the open end 51 of the associated coupling to allow the associated filter assembly 12 to be vented when it is first installed.

The coupling arrangement could be used in any form of filter apparatus, and not necessarily that described above.

## Claims

1. A filter assembly and coupling, in which the filter assembly (12) has a tubular housing (21) and, at one end, an inlet/outlet tube (25) having an axis coaxial with or parallel to the axis of the housing (21), said tube (25) being received in a socket (44) provided in said coupling (14) via an open end of said socket, characterized in that said tube (25) and said socket (44) are provided with sealing means (36,38) therebetween to define a closed annular chamber (52) between an exterior surface of the tube (25) and an interior surface of the socket (44), the tube (25) being formed with a passage (32) connecting with said chamber (52) and the coupling (14) having a passage (46) leading in a direction at an angle to the length of the tube (25) and also connected to said chamber (52), and the tube (25) being movable relative to the socket (44) while maintaining said chamber (52) closed.

2. A filter assembly and coupling according to claim 1 characterized in that the coupling passage (46) terminates in said socket in an opening spaced from said open end of the socket (44), the socket (44) being closed at an end opposite said open end, said sealing means (36,39) being provided between said tube (25) and said socket (44) at a position along said socket between the open end and the opening to the coupling passage, the distance between said sealing means and said open end and/or the opening in the coupling passage (46) being such as to accommodate said relative movement while maintaining said chamber (52) closed.

3. A filter assembly and coupling according to claim 2 characterized in that said sealing means comprise an O-ring (38) carried by the tube (25) and engaging the socket (44).

4. A filter assembly and coupling according to claim 2 or claim 3 characterized in that the chamber (52) is closed at the end thereof remote from the open end of the socket (44) by a second sealing means (36) arranged between the opening of the coupling passage and an end of laid socket (44) opposite said open end, the distance between said second sealing means (36) and the opposite end of the socket and/or the opening in the coupling passage (46) being such as to accommodate said relative movement while maintaining said chamber (52) closed.

5. A filter assembly and coupling according to claim 4 characterized in that said second sealing means comprise an O-ring (36) carried by the tube (25) and engaging the socket (44).

6. A filter assembly and coupling according to claim 4 or claim 5 characterized in that the end of the socket (44) opposite the open end through which the tube (25) is received, is also open.

7. A filter assembly and coupling according to any one of claims 1 to 6 characterized in that the passage in the tube (25) is formed by at least one aperture (32) in the tube extending in a direction normal to the length of the tube and leading into the chamber (52).

8. A filter assembly and coupling according to claim 7 characterized in that two diametrically opposed such apertures (32) are provided.

9. A filter assembly and coupling according to any one of claims 1 to 8 characterized in that the coupling passage (46)is at right angles to the length of the tube (25).

Fig.1.

EP 0 408 375 A2

Fig.2.

Fig.3.